# EUROPÄISCHE PATENTSCHRIFT

(11) **EP 1 058 430 B1**
(45) Veröffentlichungstag und Bekanntmachung des Hinweises auf die Patenterteilung: **16.03.2005**
(21) Anmeldenummer: 00111665.6
(22) Anmeldetag: 31.05.2000
(51) Int. Cl.: H04L 25/02, H04L 25/03, H04L 25/08

(54) **Flankensteuervorrichtung für ein elektrisches Datenübertragungssystem**
Transition control arrangment for an electrical data transmission system
Arrangement de réglage des transitions pour un système electrique de transmission de données

(30) Priorität: 02.06.1999 DE 19925238
(43) Veröffentlichungstag der Anmeldung: 06.12.2000
(73) Patentinhaber: STMicroelectronics GmbH, 85630 Grasbrunn (DE)
(72) Erfinder: Heinrich, Peter, 83024 Rosenheim (DE)
(74) Vertreter: Hirsch, Peter, Dipl.-Ing.

(56) Entgegenhaltungen:
- EP-A- 0 529 602
- DE-A- 19 715 455
- US-A- 5 452 308
- US-A- 5 757 217

## Beschreibung

Die Erfindung betrifft eine Flankensteuervorrichtung für ein elektrisches Datenübertragungssystem mit einer ersten Leitung und einer zweiten Leitung zur differenzmäßigen Übertragung von binären Datenimpulsen in der Form, daß einem ersten Logikwert der Datenimpulse ein hohes Potential auf der ersten Leitung und ein niedriges Potential auf der zweiten Leitung und einem zweiten Logikwert der Datenimpulse ein niedriges Potential auf der ersten Leitung und ein hohes Potential auf der zweiten Leitung zugeordnet sind.

Ein derartiges Datenübertragungssystem umfaßt üblicherweise eine größere Anzahl von Datenstellen, die mittels der beiden Leitungen miteinander verbunden sind und von denen mindestens ein Teil sowohl als Sender als auch als Empfänger arbeiten kann.

Ein erster Vorteil einer derartigen differenzmäßigen Übertragung über zwei Leitungen besteht darin, daß Störimpulse, die in gleicher Form auf beide Leitungen gelangen, bei der differenzmäßigen Bewertung oder Decodierung der über die Leitungen übertragenen Datenimpulse eliminiert werden. Ein zweiter Vorteil liegt darin, daß ein derartiges differenzmäßig arbeitendes Datenübertragungssystem Redundanz gegenüber einer Reihe von Leitungsfehlern aufweist, eine fehlerfreie Datenübertragung daher auch noch möglich ist, wenn die beiden Leitungen miteinander kurzgeschlossen sind, wenn eine der beiden Leitungen offen ist oder wenn eine der beiden Leitungen mit einem Massepotential oder einem Versorgungspotential kurzgeschlossen ist.

Nähere Erläuterungen hierzu findet man in der DE 195 23 031 A1.

Bei einem derartigen differenzmäßig arbeitenden Datenübertragungssystem kann es sich um ein CAN-System handeln. Der Begriff CAN steht für Controller Area Network. Nähere Angaben hierzu finden sich in dem Buch "Controller Area Network CAN" von Konrad Etschberger, Carl Hanser Verlag 1994, ISBN-Nr. 3-446-17596-2.

Einsatz finden derartige CAN-Systeme beispielsweise im Kraftfahrzeugbereich. Bei derartigen differenzmäßig arbeitenden Datenübertragungssystemen kann man eine Fehlererkennungs- und Fehlerverarbeitungsschaltung verwenden, mittels welcher bei der Auswertung oder Decodierung empfangener Daten je nach Leitungszustand auf unterschiedliche Signalauswahl umgeschaltet werden kann. Werden beide Leitungen des Datenübertragungssystems für fehlerfrei befunden, erfolgt eine differenzmäßige Signalauswertung derart, daß die Potentiale auf den beiden Leitungen miteinander verglichen werden. Wird ein Leitungsfehler für eine der beiden Leitungen festgestellt, wird auf eine Betriebsart umgeschaltet, in welcher die Potentialverläufe nur der nicht als fehlerhaft erkannten Schaltung ausgewertet werden. In gleicher Weise kann man vorgehen, wenn festgestellt wird, daß die beiden Leitungen miteinander kurzgeschlossen sind.

Derartige Schaltungsanordnungen zur Fehlererkennung, Fehlerverarbeitung und Umschaltung auf unterschiedliche Auswertungsbetriebsarten sind bekannt aus der bereits genannten DE 195 23 031 A1 und aus den eigenen deutschen Patentanmeldungen 198 26 388 und 198 50 672 der Anmelderin.

Bei einem derartigen differenzmäßig arbeitenden Datenübertragungssystem sollten die Potentialübergänge auf den beiden Leitungen, die gleichzeitig auftreten, gleiche Flankensteilheit aufweisen, um elektromagnetische Störabstrahlungen niedrig zu halten und um in den empfangenden Datenstellen eine gute Fehlerbeseitigung erreichen zu können. Dies wird herkömmlicherweise dadurch versucht, daß man in jeder Datenstelle jeder Leitung eine Flankenregelschaltung zuordnet, welche die Flanken auf der jeweiligen Leitung auf einen vorbestimmten Flankensteilheits-Sollwert regelt, wobei die Flankensteilheits-Sollwerte für beide Leitungen gleich sind. Eine solche Regelung ist beispielsweise aus DE-A-19 715 455 bekannt. Jede Regelschleife hat jedoch ihre eigene Verstärkung, ihre eigene Phasenkompensation und ihr eigenes Offset-Verhalten. Da sich die Regelschleifen unterschiedlicher Flankenregelschaltungen bei praktischen Ausführungsformen hinsichtlich dieser Parameter voneinander unterscheiden, kommt es zu entsprechenden Flankensteilheitsabweichungen der Ausgangssignale.

Der Erfindung liegt die Aufgabe zugrunde, dieses Problem zu überwinden und für eine Flankensteilheitsübereinstimmung auf den beiden Leitungen zu sorgen.

Dies wird erfindungsgemäß mit einer Flankensteuervorrichtung gemäß Anspruch 1 erreicht, die entsprechend den abhängigen Ansprüchen weitergebildet sein kann.

Kern der Erfindung ist es, im Normalfall, also bei korrekten Leitungszuständen, eine Flankensteilheitsregelung nur hinsichtlich des Potentialverlaufs einer der beiden Leitungen durchzuführen, die Potentialverläufe auf den beiden Leitungen hinsichtlich ihrer Flankensteilheit miteinander zu vergleichen und die Flankensteilheit des Potentialverlaufs der Leitung ohne Flankensteilheitsregelung in Abhängigkeit von dem Vergleichsergebnis zu steuern.

Aufgrund dieser Maßnahmen wird die Flankensteilheit des Potentialverlaufs einer der beiden Leitungen auf den gewünschten Sollwert geregelt und die Flankensteilheit des Potentialverlaufs der anderen Leitung entsprechend nachgesteuert.

Bei praktischen Ausführungsformen besitzt in jeder Datenstelle jede Leitung eine Flankensteuerschaltung, wobei die Flankensteuerschaltung einer Leitung eine Flankenregelung durchführt und die Flankensteuerschaltung der anderen Leitung eine Nachsteuerung auf die geregelte Flankensteilheit der anderen Leitung durchführt. Dabei bildet die flankensteilheitsregelnde Flankensteuerschaltung eine Master-Schaltung, während die nachsteuernde Flankensteilheitsschaltung eine Slave-Schaltung bildet. Man kann hinsichtlich der Verteilung von Master-Schaltung und Slave-Schaltung entweder eine feste Zuordnung vornehmen oder eine umschaltbare Zuordnung, bei welcher jede der beiden Flankensteuerschaltungen wählbar in eine Regelbetriebsart oder in eine Nachsteuerbetriebsart umschaltbar ist, wobei frei wählbar ist, welche der beiden Flankensteuerschaltungen in die Regelbetriebsart und welche der beiden Flankensteuerschaltungen in die Nachsteuerbetriebsart geschaltet werden.

Letztere Alternative ist zu bevorzugen, wenn die erfindungsgemäße Flankensteuervorrichtung mit einer Leitungsfehlerprüfschaltung zusammenarbeitet, mittels welcher die beiden Leitungen auf das Vorliegen korrekter Leitungszustände oder fehlerhafter Leitungszustände überprüft werden können. In diesem Fall kann dann, wenn Fehlerfreiheit für beide Leitungen festgestellt worden ist, eine beliebige oder vorbestimmte der beiden Flankensteuerschaltungen in die Regelbetriebsart und die andere Flankensteuerschaltung in die Nachsteuerbetriebsart geschaltet werden. Wird von der Leitungsprüfschaltung für eine der beiden Leitungen ein Leitungsfehler festgestellt, wird die Flankensteuerschaltung der intakten anderen Leitung in die Regelbetriebsart geschaltet.

Bei einer bevorzugten Ausführungsform der erfindungsgemäßen Flankensteuervorrichtung weist jede der beiden Leitungen zur Datenimpulserzeugung mindestens eine steuerbare Potentialumschalteinrichtung in Form einer steuerbaren Analogschaltereinrichtung und zur Steuerung der Flankensteilheit der Datenimpulse eine Flankensteuerschaltung auf. Die Analogschaltereinrichtung arbeitet im Einschaltzustand und damit im Bereich von Potentialverlaufsflanken in einem Analogbetrieb, beispielsweise als Analogverstärker, und stellt in den Zuständen, in welchen sie ausgeschaltet ist reines Schalterverhalten dar. Als eine solche Analogschaltereinrichtung wird beispielsweise ein Transistor, vorzugsweise in Form eines MOS-Transistors, verwendet, der im eingeschalteten Zustand über seine Steuerelektrode analog steuerbar ist.

Zum Vergleich der Flankensteilheit des Potentialverlaufs der einen Leitung mit der Flankensteilheit des Potentialverlaufs der anderen Leitung können eine Differenzierschaltung, mittels welcher die Potentialverläufe auf den beiden Leitungen je differenziert werden können, und eine Vergleichsschaltung, mittels welcher die resultierenden Differentialsignale miteinander verglichen werden können, herangezogen werden. Dabei wird die in der Nachsteuerbetriebsart befindliche Flankensteuerschaltung von dem Ausgangssignal der Vergleichsschaltung gesteuert.

Da bei einer erfindungsgemäßen Flankensteuervorrichtung nur noch die Flanken des Potentialverlaufs auf einer Leitung geregelt und die Flankensteilheit des Potentialverlaufs auf der anderen Leitung in Abhängigkeit von dem tatsächlichen Abweichungszustand der Flankensteilheiten auf beiden Leitungen nachgesteuert wird, wird immer eine gleiche Flankensteilheit auf beiden Leitungen erreicht, mindestens, solange beide Leitungen fehlerfrei sind.

Die Erfindung, weitere Aufgabenaspekte und weitere Vorteilsaspekte der Erfindung werden nun anhand von Ausführungsformen näher erläutert. In den Zeichnungen zeigen:
- Fig. 1: eine Ausführungsform einer erfindungsgemäßen Flankensteuervorrichtung, teilweise in Blockschaltbild-Darstellung;
- Fig. 2: Details der in Fig. 1 gezeigten Flankensteuervorrichtung; und
- Fig. 3: Signalverläufe, wie sie bei einer Flankensteuervorrichtung der in den Fig. 1 und 2 gezeigten Art auftreten.

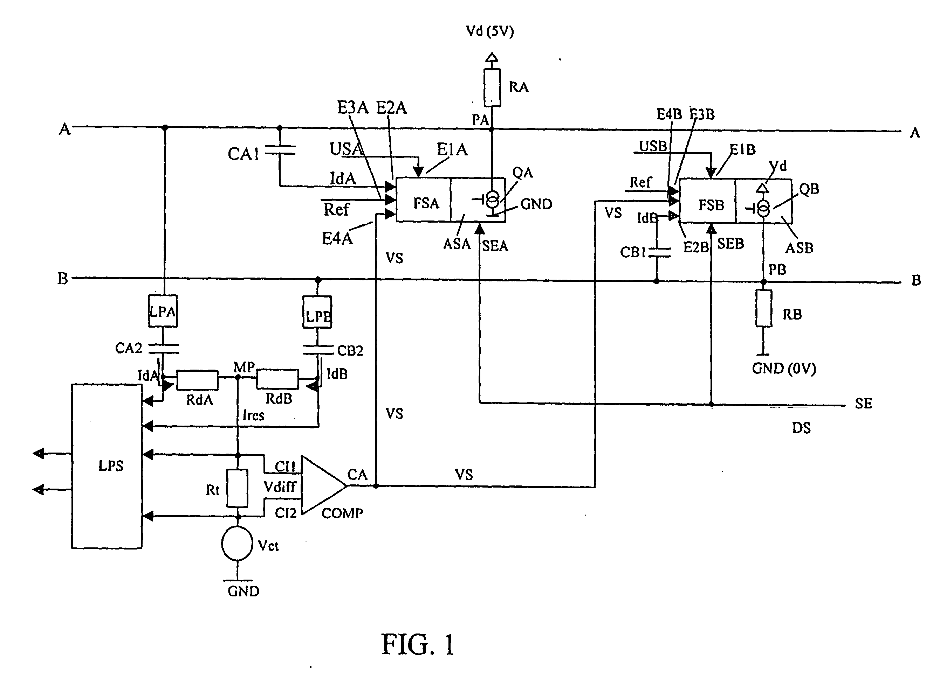

Die in Fig. 1 gezeigte Schaltungsordnung umfaßt zwei Leitungen A und B eines differenzmäßig arbeitenden Datenübertragungssystems, welche eine Mehrzahl verschiedener Datenstellen miteinander verbinden. In Fig. 1 sind Schaltungsteile einer solchen Datenstelle dargestellt.

Der Leitung A ist eine erste Reihenschaltung mit einem ersten Widerstand RA und einem ersten Analogschalter ASA zugeordnet, während der Leitung B eine zweite Reihenschaltung mit einem zweiten Widerstand RB und einem zweiten Analogschalter ASB zugeordnet sind. Leitung A ist mit einem Verbindungspunkt PA zwischen RA und ASA verbunden, während Leitung B mit einem Verbindungspunkt PB zwischen RB und ASB verbunden ist. In Fig. 1 sind die beiden Analogschalter ASA und ASB je als steuerbare Stromquelle QA bzw. QB dargestellt.

Jede der beiden Reihenschaltungen ist zwischen einen ersten Versorgungsspannungsanschluß Vd (beispielsweise +5V) und einen zweiten Versorgungsspannungsanschluß GND (beispielsweise 0V) geschaltet. Dabei liegen bei der ersten Reihenschaltung der Widerstand RA auf der Seite von Vd und die Stromquelle QA auf der Seite von GND. Umgekehrt dazu liegen bei der zweiten Reihenschaltung die Stromquelle QB auf der Seite von Vd und der Widerstand RB auf der Seite von GND.

Jeder der beiden Analogschalter ASA und ASB weist einen Schaltsteuereingang SEA bzw. SEB auf. Beide Schaltsteuereingänge SEA und SEB sind mit einem gemeinsamen Schaltsteuersignaleingang SE verbunden, über welchen EIN/AUS-Steuersignale zugeführt werden, mit welchen die beiden Analogschalter ASA und ASB zur Erzeugung der Datenimpulse auf den beiden Leitungen A und B ein- und ausgeschaltet werden.

Jeder der beiden Analogschalter ASA und ASB wird von einer Flankensteuerschaltung FAS bzw. FSB beeinflußt.

Jede der beiden Flankensteuerschaltungen FSA und FSB weist vier Eingänge auf, nämlich E1A, E2A, E3A, E4A bzw. E1B, E2B, E3B, E4B. Den Eingängen E1A und E1B werden Umschaltsteuersignale USA bzw. USB zugeführt, mittels welchen die jeweilige Flankensteuerschaltung FSA bzw. FSB zwischen einer Regelbetriebsart und einer Nachsteuerbetriebsart umschaltbar ist. Die Eingänge E2A und E2B sind über Differenzierkondensatoren CA1 bzw. CB1 mit der zugehörigen Leitung A bzw. B verbunden. Den Eingängen E3A und E3B wird je ein Referenzsignal Ref zugeführt, welches für jede der beiden Flankensteuerschaltungen FSA und FSB einen Flankensteilheits-Sollwert liefert. Den Eingängen E4A und E4B wird je ein Vergleichssignal VS zugeführt, das von einem Komparatorausgang CA eines Komparators COMP geliefert wird.

Die Leitungen A und B sind außerdem über je ein Tiefpaßfilter LPA bzw. LPB mit einem Kondensator CA2 bzw. CB2 verbunden. Die von den Tiefpaßfiltern LPA und LPB abliegenden Seiten von CA2 und CB2 sind mit den beiden Enden einer Reihenschaltung mit einem Widerstand RdA und einem Widerstand RdB verbunden. Ein Mittelpunkt MP zwischen RdA und RdB ist über einen weiteren Widerstand Rt mit einer Referenzspannungsquelle Vct verbunden, die auf der von Rt abliegenden Seite mit GND verbunden ist. Die beiden Seiten des Widerstandes Rt sind mit einem ersten Komparatoreingang CI1 bzw. einem zweiten Komparatoreingang CI2 des Komparators COMP verbunden.

Mit den beiden Kondensatoren CA2 und CB2 werden die Potentialverläufe auf den Leitungen A bzw. B differenziert. Die resultierenden Differentialsignale werden mittels der Widerstandsschaltung RdA, RdB und Rt summiert und mit der Referenzspannung Vct verglichen. Durch die Differenziervorgänge entstehen Differentialströme IdA bzw. IdB, deren Betrag und Vorzeichen von der Richtung und Steilheit der Potentialverlaufsflanken auf den Leitungen A und B abhängen. Beispielsweise führt eine ansteigende Flanke zu einem Differentialstrom, der vom jeweiligen Kondensator CA2 bzw. CB2 über den zugehörigen Widerstand RdA bzw. RdB und den Widerstand Rt einen Strom zur Referenzspannungsquelle Vct fließen läßt, während eine fallende Flanke zu einem Differentialstrom führt, durch den der Referenzspannungsquelle Vct über Rt und RdA bzw. RdB Strom entzogen wird.

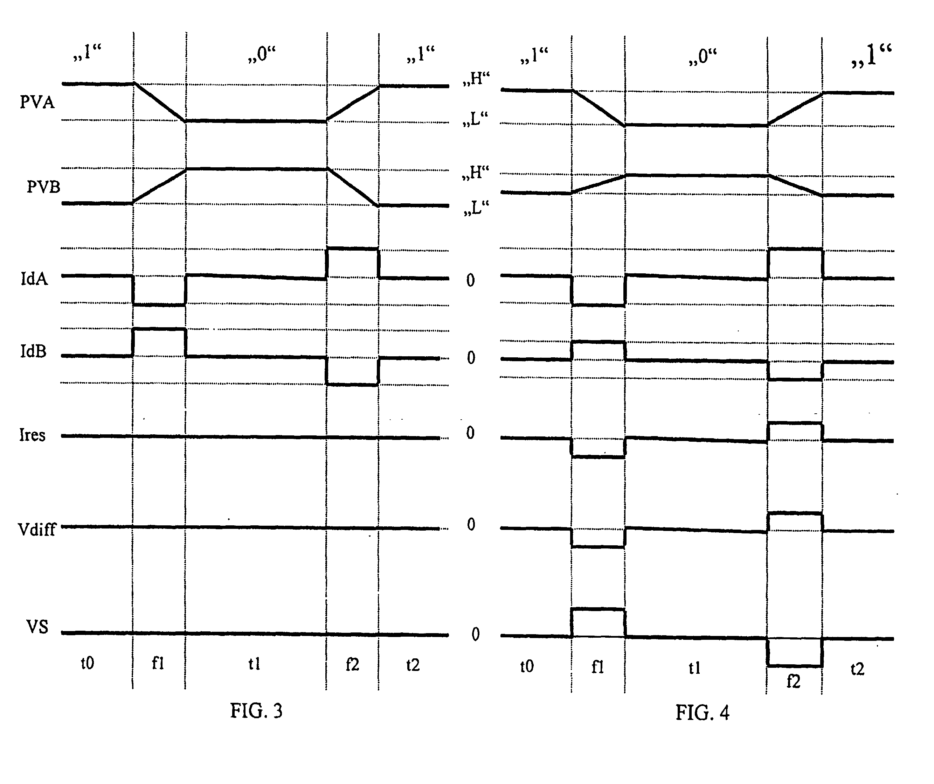

Im Idealfall treten auf beiden Leitungen A und B zur gleichen Zeit Flanken gleicher Steilheit aber mit unterschiedlicher Flankenrichtung auf. In diesem Fall entstehen Differentialströme IdA und IdB gleichen Betrages aber unterschiedlichen Vorzeichens. Der vom einen der beiden Kondensatoren CA2 und CB2 durch Rt in Richtung zu Vct gelieferte Strom kompensiert in diesem Fall den von dem anderen dieser beiden Kondensatoren über Rt Vct entzogenen Strom. Über Rt kommt es daher nicht zu einem Spannungsabfall, weswegen die beiden Eingänge CI1 und CI2 des Komparators COMP mit gleichen Potentialen beaufschlagt werden, so daß an dessen Ausgang CA ein Vergleichssignal VS gleich Null entsteht. Dies ist mit den Signalverläufen in Fig. 3 dargestellt. Entsprechend dem Protokoll für differenzmäßig arbeitende Datenübertragungssysteme sind die beiden Potentialverläufe PVA und PVB auf den beiden Leitungen A und B in der dargestellten Weise gegenläufig, so daß auch deren Flanken jeweils gegenläufige Richtungen haben. Die Differentialströme IdA und IdB weisen während Flankenzeiten f1 und f2 gleichen Betrag, jedoch entgegengesetztes Vorzeichen auf. Da sich die Differentialstromverläufe IdA und IdB im Widerstand Rt kompensieren, entsteht im Widerstand Rt ein resultierender Stromfluß Ires gleich Null. Da der Spannungsabfall über Rt entsprechend gleich Null ist, tritt zwischen den Komparatoreingängen CI1 und CI2 eine Differenzspannung Vdiff gleich Null auf. Dies führt zu einem Vergleichssignal VS von ebenfalls Null.

Anhand der Fig. 4 wird nun der Fall betrachtet, daß die beiden Potentialverläufe PVA und PVB auf den Leitungen A und B unterschiedliche Amplituden haben, was bei gleicher Flankendauer zu unterschiedlicher Flankensteilheit führt. Bei dem Beispiel ist angenommen, daß die Flankensteilheit von PVB kleiner ist als die Flankensteilheit von PVA. Dies führt dazu, daß der Betrag des Differentialstroms IdB kleiner ist als der Betrag des Differenzstroms IdA und es zu einem resultierenden Strom Ires durch Rt kommt, der im Bereich der Flanken von Null verschieden ist. Entsprechend ist die Differenzspannung Vdiff zwischen den Komparatoreingängen CI1 und CI2 während der Flankenzeiten unterschiedlich, was während der Flankenzeiten zu einem von Null verschiedenen Vergleichssignal VS führt.

Die im Bereich der Differenzier- und Summierschaltung entstehenden Spannungen werden von einer Leitungsprüfschaltung LPS überprüft und ausgewertet, deren Ausgang die bereits erwähnten Umschaltsteuersignale USA und USB liefert, die den Eingängen E1A bzw. E1B der Flankensteuerschaltungen FSA bzw. FSB zugeführt werden. Die Leitungsprüfschaltung kann beispielsweise gemäß der Lehre der bereits erwähnten eigenen deutschen Patentanmeldung 198 50 672 und/oder gemäß der Lehre der bereits erwähnten eigenen deutschen Patentanmeldung 198 26 388 ausgebildet sein. Hinsichtlich der Einzelheiten einer solchen Leitungsprüfschaltung wird hiermit ausdrücklich auf die bereits genannten eigenen Patentanmeldungen 198 26 388 und 198 50 672 hingewiesen.

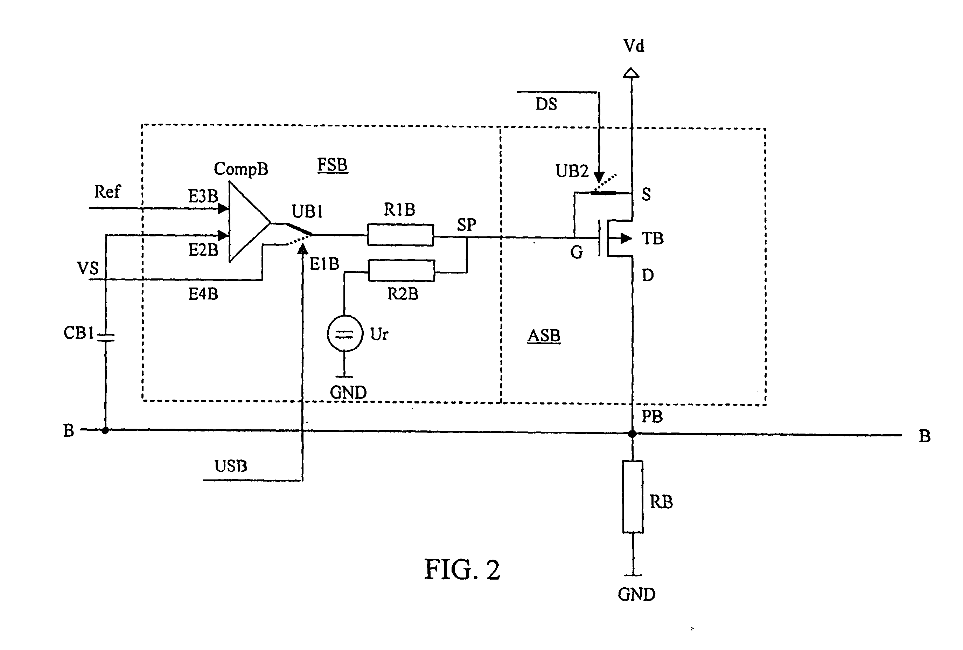

Bevor die Funktionsweise der Analogschalter QA, QB und der Flankensteuerschaltungen FSA und FSB noch näher erläutert wird, werden zunächst eine beispielsweise Realisierung für einen Analogschalter und für eine Flankensteuerschaltung anhand von Fig. 2 betrachtet.

Diese Fig. 2 zeigt eine Flankensteuerschaltung FSB und einen Analogschalter ASB nur für die Leitung B. Die Flankensteuerschaltung FSA kann identisch wie FSB ausgebildet sein. Hinsichtlich des Analogschalters QSA gibt es eine Abweichung gegenüber QSB nur in der Hinsicht, daß der mit der Leitung A verbundene Widerstand RA mit dem Spannungsversorgungsanschluß Vd und der Analogschalter QSB selber mit GND verbunden ist.

Bei der in Fig. 2 gezeigten Ausführungsform umfaßt die Flankensteuerschaltung FSB einen Flankensteilheitskomparator CompB mit zwei Eingängen, bei denen es sich um die Eingänge E2B und E3B handelt, und einem Ausgang AB. Wie bereits im Zusammenhang mit Fig. 1 erläutert, ist E2B über den Kondensator CB1 mit der Leitung B verbunden, so daß dem Eingang E2B ein Differentialsignal zugeführt wird, bei welchem es sich um die zeitliche Ableitung des Potentialverlaufs auf der Leitung B handelt, entsprechend dem vom Kondensator CB2 in Fig. 1 kommenden Differentialsignal IdB. Dem Eingang E3B wird das Referenzsignal Ref zugeführt, welches einen Flankensteilheits-Sollwert darstellt. Dem Komparator CompB in Signalflußrichtung nachgeschaltet ist eine Summierschaltung mit Widerständen R1B und R2B, die auf ihrer Ausgangsseite, in Signalflußrichtung gesehen, in einem Summierpunkt SP zusammengeschaltet sind. Die Eingangsseiten der Widerstände R1B und R2B sind mit einem Umschalter UB1 bzw. über eine Referenzspannungsquelle Ur mit GND verbunden. Über den Umschalter UB1 ist die Eingangsseite des Widerstandes R1B in Abhängigkeit von dem Umschaltsteuersignal USB entweder mit dem Ausgang AB des Komparators CompB oder mit dem Eingang E4B verbunden, dem das Vergleichssignal VS zugeführt wird.

Der Summierpunkt SP ist mit dem Gate G eines als Analogschalter dienenden P-Kanal-MOS-Transistors TB verbunden, dessen Drain B mit dem Widerstand RB und dessen Source S mit dem Spannungsversorgungsanschluß Vd verbunden sind. Gate G und Source S dieses Transistors sind über einen weiteren Umschalter UB2 miteinander verbunden, der unter Steuerung durch das Datensteuersignal DS in einen leitenden oder in einen nicht leitenden Zustand steuerbar ist. Mit DS wird die Erzeugung der über das Datenübertragungssystem zu übertragenden Datenimpulse gesteuert. Befindet sich der Umschalter UB2 im leitenden Zustand, befindet sich der Transistor TB im AusZustand. Ist der Umschalter UB2 in den nicht leitenden Zustand geschaltet, wirkt der Transistor TB als analoges Verstärkerelement, dessen Ausgangsstrom von dem Spannungswert abhängt, welcher seinem Gate G vom Summierpunkt SP geliefert wird.

Die Referenzspannungsquelle Ur liefert über R2B an den Summierpunkt SP ein Grundsteilheitssignal, während über den Widerstand R1B an den Summierpunkt SP ein Flankenfehlersignal FFS geliefert wird.

Befindet sich der Umschalter UB1 in dem in Fig. 2 mit einem durchgehenden Strich gezeichneten Schaltzustand, ist die Flankensteuerschaltung FSB in die Regelbetriebsart geschaltet. Das heißt, daß mittels des Komparators CompB der Differentialstrom IdB als Istwert mit dem Referenzwert Ref als Sollwert verglichen wird und bei einer Abweichung zwischen diesen beiden Werten, also einer Abweichung zwischen Sollund Istwert, ein von Null verschiedenes Flankenfehlersignal FFS an den Summierpunkt SP geliefert wird. Befindet sich dagegen der Umschalter UB1 in dem in Fig. 2 gestrichelten Schaltzustand, in welchem sich die Flankensteuerschaltung FSB in der Steuerbetriebsart befindet, wird dem Summierpunkt SP über R1B als Flankenfehlersignal FFS das Vergleichssignal VS vom Komparator COMP zugeführt.

Es wird nun die Funktionsweise einer erfindungsgemäßen Flankensteuervorrichtung in der in den Fig. 1 und 2 gezeigten Ausbildung betrachtet.

Bei einem differenzmäßig arbeitenden Datenübertragungssystem sind die beiden Analogschalter ASA und ASB, mit deren Schaltzuständen die Datenimpulse erzeugt werden, immer gleichzeitig in den nicht leitenden Zustand oder den leitenden Zustand geschaltet. Im nicht leitenden Zustand, dem beispielsweise der Datenlogikwert "1" zugeordnet ist, befinden sich die Potentialwerte der Leitungen A und B auf Vd (beispielsweise 5V) bzw. GND (beispielsweise 0V). Sind ASA und ASB leitend geschaltet, was dann dem Datenlogikwert "0" entspricht, befinden sich die Potentiale der Leitungen A und B auf GND bzw. Vd.

Geht man davon aus, daß sich die beiden Schalter ASA und ASB zunächst im nicht leitenden Zustand befinden, weisen die Leitungen A und B ein hohes Potential "H" bzw. ein niedriges Potential "L" auf, wie es in den Fig. 3 und 4 im Zeitabschnitt t0 gezeigt ist. Wird mittels des Datensteuersignals DS ein Logikwertwechsel des zu übertragenden Datenimpulses gesteuert, werden die beiden Schalter ASA und ASB je in den leitenden Zustand geschaltet, was nach der Flankenzeitdauer f1 zu den Potentialverläufen führt, wie sie in den Fig. 3 und 4 in den Zeitabschnitten t1 gezeigt sind. Was während der Flankenzeiten f1 passiert, wird anhand von Fig. 2 betrachtet. Wenn zu Beginn des Zeitabschnittes f1 der Umschalter UW2 in Fig. 2 vom Datensteuersignal DS in den nicht leitenden Zustand geschaltet wird, wirkt zunächst das von der Referenzspannungsquelle Ur erzeugte Grundsteilheitssignal am Gate G des Transistors TB, was diesen Transistor in einen leitenden Zustand steuert. Kapazitäten des Transistors TB und Leitungskapazitäten der Leitung B führen zu einem allmählichen Potentialanstieg auf Leitung B mit einer bestimmten Flankensteilheit. Diese Flankensteilheit wird mittels des Kondensators CB1 differenziert und führt zu dem Differentialstromwert IdB während der Flankenzeit f1. Je nach dem, ob die mit dem Grundsteilheitssignal hervorgerufene Flankensteilheit mit dem durch Ref vorgegebenen Flankensteilheits-Sollsignal übereinstimmt oder nicht, entsteht am Ausgang AB des Komparators CompB ein Fehlersignal FFS gleich Null oder ungleich Null. Bei einem Fehlersignal FFS ungleich Null erfolgt eine entsprechende Korrektur des dem Gate G des Transistors TB zugeführten Spannungswertes, wodurch der Transistor TB dem Fehlersignal entsprechend stärker oder schwächer leitend gesteuert wird, was zu einem geringeren oder stärkeren Source- bzw. Drainstrom des Transistors TB führt und damit zu einer entsprechenden Änderung der Flankensteilheit. Sind die Kapazitäten des Transistors TB und die Leitungskapazitäten der Leitung B am Ende der Flankenzeitdauer f1 aufgeladen, geht das Potential PVB der Leitung B in den konstanten hohen Wert "H" über. Der Differentialstromwert IdB wird dann wieder zu Null.

Im Analogschalter ASA in Fig. 1 entstehen entsprechende Abläufe, jedoch mit abnehmender Flanke und entsprechend mit negativem Differentialstromwert IdA, wie dies in den Fig. 3 und 4 gezeigt ist.

Im Idealfall, wie er in Fig. 3 gezeigt ist, haben die Potentialverläufe PVA und PVB auf den Leitungen A und B gleiche hohe Potentialwerte "H", gleiche niedrige Potentialwerte "L" und gleiche Flankensteilheiten. In diesem Fall entstehen am Mittelpunkt MP der Summierschaltung mit den Widerständen RdA und RdB Differentialströme IdA und IdB entgegengesetzten Vorzeichens und gleichen Betrages, so daß der resultierende Differentialstromwert Ires und damit die Differenzspannung Vdiff zwischen den Eingängen CI1 und CI2 des Komparators COMP gleich Null sind. Entsprechend ist die am Ausgang CA des Komparators COMP entstehende Vergleichsspannung VS gleich Null.

Bei dem betrachteten Beispiel hat die Flankensteuerschaltung FSB die Master-Funktion, ist also dadurch in die Regelbetriebsart geschaltet, daß ihr Umschalter UB1 in die in Fig. 2 mit durchgehender Linie gezeigte Schaltposition gesteuert ist. In diesem Fall hat die Flankensteuerschaltung FSA die Slave-Funktion, ist also ihr dem Umschalter UB1 entsprechender (nicht gezeigter) Schalter in den in Fig. 2 gestrichelten Schaltzustand gebracht.

Bei den Verhältnissen, die in Fig. 3 gezeigt sind und zu einem Vergleichssigal VS gleich Null führen, wird der Schalter ASA von der Flankensteuerschaltung FSA in die Flankengrundsteilheit gesteuert, da dem Grundsteilheitssignal kein Flankenfehlersignal überlagert wird. Die Referenzspannung Ur ist dabei so dimensioniert, daß sie zu einer Flankengrundsteilheit führt, die der durch das Referenzsignal Ref vorgegebenen Sollflankensteilheit entspricht.

Es wird nun der in Fig. 4 gezeigte Fall betrachtet, bei welchem sich Unsymmetrien hinsichtlich der Potentialverläufe PVA und PVB und hinsichtlich der Flankensteilheit auf den beiden Leitungen A und B ergeben. Die unterschiedliche Flankensteilheit führt dabei zu Differentialströmen IdA und IdB mit unterschiedlichem Betrag, was wiederum einen resultierenden Differentialstrom Ires und eine Differenzspannung Vdiff hervorruft, die von Null verschieden sind. Daraus resultiert am Ausgang CA des Komparators COMP ein Vergleichssignal VS, das ebenfalls ungleich Null ist. Dieses wird in der Flankensteuerschaltung FSA dem Grundsteilheitssignal als Flankenfehlersignal FFS überlagert, was zu einer entsprechenden Korrektur der Flankensteilheit des vom Analogschalter ASA gelieferten Stroms führt. Auf diese Weise wird der vom Analogschalter ASA gelieferte Strom so lange geändert, bis das Vergleichssignal VS zu Null geworden ist, was bedeutet, daß die Flankensteilheit des Potentialverlaufs PVA gleich der Flankensteilheit des Potentialverlaufs PVB geworden ist.

Vorausgehend ist der Fall betrachtet worden, daß beide Leitungen A und B in Ordnung sind und eine der Flankensteuerschaltungen, nämlich die der Leitung B, die Master-Funktion übernimmt und eine Flankenregelung durchführt, während die Flankensteuerschaltung der Leitung A die Slave-Funktion übernimmt und eine vom Vergleichssignal VS abhängige Flankensteilheit steuert. Dies ist dann der Fall, wenn mittels der Leitungsprüfschaltung LPS unter Auswertung der Differenzstromsignale IdA und IdB ermittelt worden ist, daß beide Leitungen fehlerfrei sind, woraufhin über die Umschaltsteuersignale USA und USB die Flankensteuerschaltungen FSB und FSA in die Regelbetriebsart bzw. die Steuerbetriebsart geschaltet worden sind.

Stellt die Leitungsprüfschaltung LPS einen Leitungsfehler auf einer der beiden Leitungen A und B fest, führt dies dazu, daß nur noch der Potentialverlauf der anderen Leitung ausgewertet wird. Die beiden Leitungen auf gleiche Flankensteilheit zu bringen, macht nun keinen Sinn mehr. Daher werden beide Flankensteuerschaltungen FSA und FSB mittels der von der Leitungsprüfschaltung LPS gelieferten Umschaltsteuersignale USA und USB in die Regelbetriebsart geschaltet, so daß das vom Komparator COMP gelieferte Vergleichssignal VS sich in keiner der beiden Flankensteuerschaltungen FSA und FSB mehr auswirkt. Da ohnehin nur noch der Potentialverlauf der einen, nicht defekten Leitung ausgewertet wird, spielt es keine Rolle, wenn die beiden Flankensteuerschaltungen auf unterschiedliche Flankensteilheit regeln.

Gleiches gilt für Leitungsfehler, bei denen beide Leitungen defekt sind oder die beiden Leitungen miteinander kurzgeschlossen sind. Sind beide Leitungen defekt, ist eine sichere Decodierung der übertragenen Datenimpulse nicht mehr möglich. Sind die beiden Leitungen miteinander kurzgeschlossen, treten auf beiden Leitungen gleiche Potentialverläufe auf und wird mittels der Leitungsprüfschaltung LPS auf die Auswertung des Potentialverlaufs auf nur einer der beiden Leitungen umgeschaltet. Auch in diesem Fall werden beide Flankensteuerschaltungen FSA und FSB je in die Regelbetriebsart geschaltet, wird aber nur das Regelergebnis einer der beiden Flankensteuerschaltungen ausgenutzt.

In Fig. 1 ist eine Ausführungsform dargestellt, bei welcher für CA1 und CA2 einerseits und CB1 und CB2 andererseits je getrennte Kondensatoren verwendet werden. Es besteht aber auch die Möglichkeit, beispielsweise die Kondensatoren CA1 und CB1 für die Funktionen mit zu verwenden, für welche die Kondensatoren CA2 und CB2 verwendet werden.

## Patentansprüche

1. Flankensteuervorrichtung für ein elektrisches Datenübertragungssystem mit einer ersten Leitung (A) und einer zweiten Leitung (B) zur differenzmäßigen Übertragung von binären Datenimpulsen in der Form, daß einem ersten Logikwert ("1") der Datenimpulse ein hohes Potential (5V) auf der ersten Leitung (A) und ein niedriges Potential (0V) auf der zweiten Leitung (B) und einem zweiten Logikwert ("0") der Datenimpulse ein niedriges Potential (0V) auf der ersten Leitung (A) und ein hohes Potential (5V) auf der zweiten Leitung (B) zugeordnet sind, wobei die Flankensteuervorrichtung derart ausgebildet ist, daß sie Mittel zur Regelung der Flankensteilheit des Potentialverlaufs einer ersten der beiden Leitungen (A, B) auf einen Sollwert enthält ;
**dadurch gekennzeichnet, daß** sie ferner enthält:
Mittel zum Vergleich der Flankensteilheit des Potentialverlaufs auf der einen Leitung mit der Flankensteilheit des Potentialverlaufs auf der anderen Leitung und
Mittel zur Steuerung der Flankensteilheit des Potentialverlaufs der zweiten Leitung in Abhängigkeit von dem Vergleichsergebnis.

2. Flankensteuervorrichtung nach Anspruch 1, bei welcher:
jeder der beiden Leitungen (A, B) zur Datenimpulserzeugung mindestens eine steuerbare Potentialumschalteinrichtung in Form einer steuerbaren Analogschaltereinrichtung (ASA, ASB) und zur Steuerung der Flankensteilheit der Datenimpulse eine Flankensteuerschaltung (FSA, FSB) zugeordnet ist;
eine Differenzierschaltung (CA2, CB2) vorgesehen ist, mittels welcher der Potentialverlauf einer jeden Leitung (A, B) differenzierbar ist;
eine Vergleichsschaltung (RdA, RdB, Rt, COMP, Vct) vorgesehen ist, mittels welcher die von der Differenzierschaltung (CA2, CB2) erzeugten Differentialsignale (IdA, IdB) der beiden Leitungen (A, B) miteinander auf Betragsgleichheit überprüfbar sind;
die Flankensteuerschaltung (FSA, FSB) mindestens einer der beiden Leitungen (A, B) eine Flankenregelschaltung aufweist, mittels welcher die Flankensteilheit von Potentialumschaltungen dieser Leitung über die zugehörige Analogschaltereinrichtung (ASA, ASB) auf einen vorgebbaren Flankensteilheits-Sollwert regelbar ist;
die Flankensteuerschaltung mindestens der anderen Leitung ausgestaltet ist Potentialumschaltvorgänge der zugehörigen Analogschaltereinrichtung in Abhängigkeit von einem Ausgangssignal (VS) der Vergleichsschaltung (RdA, RdB, Rt, COMP, Vct) auf die Flankensteilheit der Potentialumschaltungen der anderen Leitung zu steuern.

3. Flankensteuervorrichtung nach Anspruch 2, bei welcher jede der beiden Flankensteuerschaltungen (FSA, FSB) eine Flankenregelschaltung aufweist und mit einer Betriebsartenumschalteinrichtung (UB1) versehen ist, mittels welcher sie zwischen einer Flankenregelbetriebsart und einer in Abhängigkeit von dem Ausgangssignal (VS) der Vergleichsschaltung (RdA, RdB, Rt, COMP, Vct) arbeitenden Flankensteuerbetriebsart umschaltbar ist, wobei eine auswählbare der beiden Flankensteuerschaltungen in die Flankenregelbetriebsart und die jeweils andere Flankensteuerschaltung in die Flankensteuerbetriebsart schaltbar ist.

4. Flankensteuervorrichtung nach Anspruch 3, für ein Datenübertragungssystem mit einer Leitungsfehlerprüfschaltung (LPS), mittels welcher die beiden Leitungen (A, B) auf das Vorliegen von Leitungsfehlern überprüfbar sind,
wobei die Betriebsarten der beiden Flankensteuerschaltungen (FSA, FSB) in Abhängigkeit von dem Prüfergebnis der Leitungsfehlerprüfschaltung (LPS) steuerbar sind, derart, daß bei Leitungsfehlerfreiheit eine der beiden Flankensteuerschaltungen (FSB) in die Flankenregelbetriebsart und die andere in die Flankensteuerbetriebsart und bei Feststellung eines Leitungsfehlers beide Flankensteuerschaltungen (FSA, FSB) in die Flankenregelbetriebsart geschaltet werden.

5. Flankensteuervorrichtung nach einem der Ansprüche 2 bis 4, bei welcher die Analogschaltereinrichtung (ASA, ASB) einer jeden Leitung (A, B) eine zwischen einen ersten Versorgungsspannungsanschluß (Vd) und einen zweiten Versorgangsspannungsanschluß (GND) gefügte Reihenschaltung mit mindestens einem Transistor (TB) und einem Widerstand (RA, RB) aufweist,
wobei bei jeder der beiden Reihenschaltungen ein Verbindungspunkt (PA, PB) zwischen dem Transistor (TB) und dem Widerstand (RA, RB) mit der je zugehörigen Leitung (A, B) verbunden ist und bei der einen Reihenschaltung der Transistor (TB) auf der zum ersten Spannungsversorgungsanschluß (Vd) weisenden Seite und der Widerstand (RA) auf der zum zweiten Spannungsversorgungsanschluß (GND) weisenden Seite der Reihenschaltung und bei der anderen Reihenschaltung der Transistor auf der zum zweiten Spannungsversorgungsanschluß (GND) weisenden Seite und der Widerstand (RA) auf der zum ersten Spannungsversorgungsanschluß (Vd) weisenden Seite der Reihenschaltung angeordnet sind,
und wobei dem Transistor (TB) ein Steuerschalter (UB2) zugeordnet ist, der in Abhängigkeit von einem die Datenimpulserzeugung steuernden Steuersignal (DS) schaltbar ist und mittels welchem der Transistor (TB) umschaltbar ist zwischen einem Auszustand und einem Einschaltzustand, in welchem er in einem Analogbetrieb arbeitet.

6. Flankensteuervorrichtung nach einem der Ansprüche 2 bis 5, bei welcher mindestens eine der Flankensteuerschaltungen aufweist:
ein Grundsteilheitssteuerglied (Vr), welches ein eine vorbestimmte Flankengrundsteilheit steuerndes Grundsteilheitssignal vorgibt;
einen Flankensteilheitskomparator (CompB) mit zwei Komparatoreingängen (E2A, E3A, E2B, E3B), von denen einer (E3A, E3B) mit einem Steilheits-Sollsignal (Ref) und der andere (E2A, E2B) mit einem Steilheits-Istsignal (IdA, IdB) beaufschlagt wird, und mit einem Komparatorausgang (AB), der bei einer Abweichung zwischen Steilheits-Sollsignal und Steilheits-Istsignal ein Steilheitsfehlersignal (FFS) liefert;
und eine Steilheitssignalsummierschaltung (R1B, R2B, SP), mittels welcher das Steilheitsfehlersignal (FFS) zu dem Grundsteilheitssteuersignal (Vr) hinzuaddiert wird.

7. Flankensteuervorrichtung nach Anspruch 6, bei welcher der Istsignal-Komparatoreingang (E2A, E2B) über einen Kondensator (CA1, CB1) mit der zugehörigen Leitung (A, B) verbunden ist.

8. Flankensteuervorrichtung nach Anspruch 6 oder 7, bei welcher zwischen dem Komparatorausgang (AB) und der Steilheitssignalsummierschaltung (R1B, R2B, SP) ein Umschalter (UB1) angeordnet ist, mittels welchem ein Eingang der Steilheitssignalsummierschaltung (R1B, R2B, SP) umschaltbar entweder mit dem Komparatorausgang (AB) oder mit einem Ausgang (CA) der Vergleichsschaltung (COMP) koppelbar ist.

9. Flankensteuervorrichtung nach einem der Ansprüche 2 bis 8, bei welcher die Differenzierschaltung (CA1, CB1) ein mit der ersten Leitung (A) verbundenes erstes Differenzierglied (CA1) zur Erzeugung eines ersten Differentialsignals (IdA) und ein mit der zweiten Leitung (B) verbundenes zweites Differenzierglied (CB1) zur Erzeugung eines zweiten Differentialsignals (IdB) aufweist.

10. Flankensteuervorrichtung nach Anspruch 9, bei welcher die Vergleichsschaltung aufweist:
eine Summierschaltung (RdA, RdB, Rt, COMP, Vct), mittels welcher ein die Summe aus den beiden Differentialsignalen (IdA, IdB) darstellendes Summensignal (Ires) erzeugbar ist;
eine Referenzsignalquelle (Vct), mittels welcher ein Referenzsignal bereitstellbar ist;
und ein Vergleichsglied COMP), mittels welchem das Summensignal (Ires) mit dem Referenzsignal (Vct) vergleichbar ist und dessen Ausgangssignal das Ausgangssignal (VS) der Vergleichsschaltung bildet.

11. Flankensteuervorrichtung nach Anspruch 10, bei welcher die Summierschaltung eine Widerstandsschaltung (RdA, RdB, Rt) aufweist mit einem Summierungsschaltungsknoten (MP), einem zwischen den Summierungsschaltungsknoten (MP) und das erste Differenzierglied (CA1) geschalteten ersten Widerstand (RdA), einem zwischen den Summierungsschaltungsknoten (MP) und das zweite Differenzierglied (CB1) geschalteten zweiten Widerstand (RdB) und einem zwischen den Summierungsschaltungsknoten (MP) und die Referenzspannungsquelle (Vct) geschalteten dritten Widerstand (Rt).

## Claims

1. A slope control device for an electric data transmission system having a first line (A) and a second line (B) for differentially transmitting binary data pulses in such a manner that a first logic value ("1") of the data pulses has a high potential (5V) on the first line (A) and a low potential (0V) on the second line (B) associated therewith and a second logic value ("0") of the data pulses has a low potential (0V) on the first line (A) and a high potential (5V) on the second line (B) associated therewith, said slope control device being designed such that it has means for
regulating the slope steepness of the potential curve of a first one of both lines (A, B) to a desired value;
**characterized in that** it comprises furthermore:
means for comparing the slope steepness of the potential curve on one line to the slope steepness of the potential curve on the other line; and
means for controlling the slope steepness of the potential curve of the second line as a function of the comparison result.

2. The slope control device of claim 1, wherein:
each of the two lines (A, B) has associated therewith at least one controllable potential switching means in the form of a controllable analog switch means (ASA, ASB) for data pulse generation, and a slope control circuit (FSA, FSB) for controlling the slope steepness of the data pulses;
a differentiating circuit (CA2, CB2) is provided by means of which the potential curve of each line (A, B) can be differentiated;
a comparison circuit (RdA, RdB, Rt, COMP, Vct) is provided by means of which the differential signals (IdA, IdB) of both lines (A, B) generated by the differentiating circuit (CA2, CB2) can be checked for identity thereof in amount;
the slope control circuit (FSA, FSB) of at least one of the two lines (A, B) has a slope regulating circuit by means of which the slope steepness of potential switching operations of this line can be regulated to a presettable desired slope steepness value via the associated analog switch means (ASA, ASB);
the slope control circuit at least of the other line is designated to control potential switching operations of the associated analog switch means, as a function of an output signal (VS) of the comparison circuit (RdA, RdB, Rt, COMP, Vct), to the slope steepness of the potential switching operations of the other line.

3. The slope control device of claim 2,
wherein each of the two slope control circuits (FSA, FSB) has a slope regulating circuit and is provided with a mode switching means (UB1) by means of which it is adapted to be switched over between a slope regulating mode and a slope controlling mode operating as a function of the output signal (VS) of the comparison circuit (RdA, RdB, Rt, COMP, Vct), with a selective one of said two slope control circuits being adapted to be switched to the slope regulating mode and the respective other slope control circuit being adapted to be switched to the slope controlling mode.

4. The slope control device of claim 3, for a data transmission system comprising a line error checking circuit (LPS) through which the two lines (A, B) can be checked for the presence of line errors,
wherein the modes of operation of the two slope control circuits (FSA, FSB) are controllable as a function of the checking result of the line error checking circuit (LPS) such that, when no line errors are present, one of the two slope control circuits (FSB) is switched to the slope regulating mode and the other one to the slope controlling mode, and in case a line error is ascertained, both slope control circuits (FSA, FSB) are switched to the slope regulating mode.

5. The slope control device of any of claims 2 to 4,
wherein the analog switch means (ASA, ASB) of each line (A, B,) comprises a series connection including at least one transistor (TB) and a resistor (RA, RB) and connected between a first supply voltage terminal (Vd) and a second supply voltage terminal (GND),
in each of the two series connections, a connecting point (PA, PB) between transistor (TB) and resistor (RA, RB) is connected to the respectively associated line (A, B), and in one series connection said transistor (TB) is disposed on the series connection side directed towards the first voltage supply terminal (Vd) and the resistor (RA) is disposed on the series connection side directed towards the second voltage supply terminal (GND), and in the other series connection the transistor is disposed on the series connection side directed towards the second voltage supply terminal (GND) and the resistor (RA) is disposed on the series connection side directed towards the first voltage supply terminal (Vd),
the transistor (TB) having a control switch (UB2) associated therewith which is adapted to be switched as a function of a control signal (DS) controlling data pulse generation and by means of which the transistor (TB) is adapted to be switched over between an off-state and an on-state in which it operates in an analog mode.

6. The slope control device of any of claims 2 to 5,
wherein at least one of the slope control circuits comprises:
a basic steepness control member (Vr) presetting a basic steepness signal controlling a predetermined basic stope steepness;
a slope steepness comparator (ComB) having two comparator inputs (E2A, E3A, E2B, E3B) one of which (E3A, E3B) has a desired steepness signal (Ref) applied thereto and the other one of which (E2A, E2B) has an actual steepness signal (IdA, IdB) applied thereto, and having a comparator output (AB) delivering a steepness error signal (FFS) in case of a deviation between desired steepness signal and actual steepness signal:
and a steepness signal summing circuit (R1B, R2B, SP) by means of which the steepness error signal (FFS) is added to the basic steepness control signal (Vr).

7. The slope control device of claim 6,
wherein the actual signal comparator input (E2A, E2B) is connected to the associated line (A, B) via a capacitor (CA1, CB1).

8. The slope control device of claim 6 or 7,
wherein, between comparator output (AB) and steepness signal summing circuit (R1B, R2B, SP) there is disposed a change-over switch (UB1) by means of which an input of the steepness signal summing circuit (R1B, R2B, SP) is adapted to be coupled, in a manner permitting switching over, either to the comparator output (AB) or to an output (CA) of the comparison circuit (COMP).

9. The slope control device of any of claims 2 to 8,
wherein the differentiating circuit (CA1, CB1) comprises a first differentiating member (CA1) connected to the first line (A) for generating a first differential signal (IdA), and a second differentiating member (CB1) connected to the second line (B) for generating a second differentiating signal (IdB).

10. The slope control device of claim 9,
wherein the comparison circuit comprises:
a summing circuit (RdA, RdB, Rt, COMP, Vct) by means of which a sum signal (Ires) can be generated representing the sum of the two differential signals (IdA, IdB);
a reference signal source (Vct) by means of which a reference signal can be provided;
and a comparison member (COMP) by means of which the sum signal (Ires) can be compared to the reference signal (Vct) and the output signal of which constitutes the output signal (VS) of the comparison circuit.

11. The slope control device of claim 10,
wherein the summing circuit comprises a resistor circuit (RdA, RdB, Rt) having a summing circuit node (MP), a first resistor (RdA) connected between summing circuit node (MP) and first differentiating member (CA1), a second resistor (RdB) connected between summing circuit node (MP) and second differentiating member (CB1), and a third resistor (Rt) connected between summing circuit node (MP) and reference voltage source (Vct).

## Revendications

1. Dispositif de commande des transitions pour un système électrique de transmission de données comprenant une première ligne (A) et une seconde ligne (B) pour la transmission différentielle d'impulsions de données binaires sous une forme telle qu'à une première valeur logique ("1") des impulsions de données sont associés un potentiel élevé (5V) sur la première ligne (A) et un potentiel faible (0V) sur la deuxième ligne (B), et à une seconde valeur logique ("0") des impulsions de données sont associés un potentiel faible (0V) sur la première ligne (A) et un potentiel élevé (5V) sur la seconde ligne (B), le dispositif de commande des transitions étant agencé de telle sorte qu'il comporte des moyens pour régler à une première valeur de consigne la pente de flanc de la courbe de potentiel d'une première des deux lignes (A, B), **caractérisé en ce qu'**il comporte en outre des moyens pour comparer la pente de flanc de la courbe de potentiel sur l'une des lignes avec la pente de flanc de la courbe de potentiel sur l'autre ligne; et des moyens pour commander la pente de flanc de la courbe de potentiel de la seconde ligne en fonction du résultat de cette comparaison.

2. Dispositif de commande des transitions selon la revendication 1, dans lequel
il est associé à chacune des deux lignes (A, B) de génération d'impulsions de données au moins un dispositif de commutation de potentiel commandable se présentant sous la forme d'un commutateur analogique (ASA, ASB) commandable, ainsi qu'un circuit de commande de flanc (FSA, FSB) destiné à commander la pente des flancs des impulsions de données;
il est prévu un circuit différenciateur (CA2, CB2) permettant de différencier la courbe de potentiel de chaque ligne (A, B);
il est prévu un circuit comparateur (RdA, RdB, Rt, COMP, Vct) permettant de vérifier les signaux différentiels (IdA, IdB) des deux lignes (A, B) produits par le circuit différenciateur (CA2, CB2), aux fins de déterminer si leurs valeurs sont identiques;
le circuit de commande de flanc (FSA, FSB) d'au moins une des deux lignes (A, B) présente un circuit de réglage de flanc permettant de régler à une valeur de consigne de pente de flanc prédéterminée la pente de flanc de commutations de potentiel de cette ligne, par l'intermédiaire du commutateur analogique (ASA, ASB) associé; le circuit de commande de flanc au moins de l'autre ligne est agencé pour commander des opérations de commutation de potentiel du commutateur analogique associé, en fonction d'un signal de sortie (VS) du circuit comparateur (RdA, RdB, Rt, COMP, Vct), afin d'obtenir la pente de flanc des commutations de potentiel de l'autre ligne.

3. Dispositif de commande des transitions selon la revendication 2, dans lequel chacun des deux circuits de commande de flanc (FSA, FSB) comprend un circuit de réglage de flanc et est pourvu d'un moyen de commutation de mode de service (UB1) permettant de le commuter entre un mode de réglage de flanc et un mode de commande de flanc travaillant en fonction du signal de sortie (VS) du circuit comparateur (RdA, RdB, Rt, COMP, Vct), l'un des deux circuits de commande de flanc pouvant être sélectionné pour être commuté en mode de réglage de flanc et l'autre circuit de commande de flanc étant commuté en mode de commande de flanc.

4. Dispositif de commande des transitions selon la revendication 3, destiné à un système de transmission de données comprenant un circuit détecteur de défauts de ligne (LPS) permettant de vérifier les deux lignes (A, B) pour déterminer si elles présentent des défauts, les modes de service des deux circuits de commande de flanc (FSA, FSB) pouvant être commandés en fonction du résultat du contrôle effectué par le circuit détecteur de défaut de ligne (LPS), de telle sorte qu'en l'absence de défaut de ligne, l'un des deux circuits de commande de flanc (FSB) soit commuté en mode de réglage de flanc et l'autre en mode de commande de flanc et, en cas de détection d'un défaut de ligne, les deux circuits de commande de flanc (FSA, FSB) soient commutés en mode de réglage de flanc.

5. Dispositif de commande des transitions selon une des revendications 2 à 4, dans lequel le moyen formant commutateur analogique (ASA, ASB) de chaque ligne (A, B) présente un circuit série intercalé entre une première borne de tension d'alimentation (Vd) et une deuxième borne de tension d'alimentation (GND) et comprenant au moins un transistor (TB) et une résistance (RA, RB), chacun des deux circuits série comportant un point de liaison (PA, PB) entre le transistor (TB) et la résistance (RA, RB) qui est relié à la ligne (A, B) associée, et le transistor (TB) de l'un des circuits série étant disposé côté première borne d'alimentation en tension (Vd) et la résistance (RA) étant disposée côté deuxième borne d'alimentation en tension (GND) du circuit série, et le transistor de l'autre circuit série étant disposé côté deuxième borne d'alimentation en tension (GND) et la résistance (RA) étant disposée côté première borne d'alimentation en tension (Vd) du circuit série, et un interrupteur de commande (UB2) étant associé au transistor (TB), qui peut être commuté en fonction d'un signal de commande (DS) commandant la génération d'impulsions de données et qui permet de commuter le transistor (TB) entre un état bloqué et un état passant, dans lequel il travaille en mode analogique.

6. Dispositif de commande des transitions selon une des revendications 2 à 5, dans lequel au moins un des circuits de commande de flanc comprend
un élément de commande de pente de base (Vr) qui délivre un signal de pente de base commandant une pente de base de flanc prédéterminée;
un comparateur de pente de flanc (CompB) possédant deux entrées de comparateur (E2A, E3A, E2B, E3B), dont l'un (E3A, E3B) reçoit un signal de consigne de pente (Ref) et l'autre (E2A, E2B) un signal effectif de pente (IdA, IdB), et une sortie de comparateur (AB) qui, en cas d'écart entre le signal de consigne de pente et le signal effectif de pente, émet un signal de défaut de pente (FFS);
et un circuit additionneur de signaux de pente (R1B, R2B, SP) qui ajoute le signal de défaut de pente (FFS) au signal de commande de pente de base (Vr).

7. Dispositif de commande des transitions selon la revendication 6, dans lequel l'entrée de comparateur de signal effectif (E2A, E2B) est connectée via un condensateur (CA1, CB2) à la ligne (A, B) associée.

8. Dispositif de commande des transitions selon la revendication 6 ou 7, dans lequel il est prévu, entre la sortie de comparateur (AB) et le circuit additionneur de signaux de pente (R1B, R2B, SP), un commutateur (UB1) permettant de commuter une entrée du circuit additionneur de signaux de pente (R1B, R2B, SP) pour la coupler soit à la sortie de comparateur (AB), soit à une sortie (CA) du circuit comparateur (COMP).

9. Dispositif de commande des transitions selon une des revendications 2 à 8, dans lequel le circuit différenciateur (CA1, CB1) comprend un premier élément différenciateur (CA1), relié à la première ligne (A) et destiné à générer un premier signal différentiel (IdA), et un deuxième élément différenciateur (CB1) relié à la deuxième ligne (B) et destiné à générer un deuxième signal différentiel (IdB).

10. Dispositif de commande des transitions selon la revendication 9, dans lequel le circuit comparateur comprend
un circuit additionneur (RdA, RdB, Rt, COMP, Vct) permettant de produire un signal de somme (Ires) représentant la somme des deux signaux différentiels (IdA, IdB);
une source de signal de référence (Vct) permettant de fournir un signal de référence; et
un élément comparateur (COMP) qui permet de comparer le signal de somme (Ires) avec le signal de référence (Vct) et dont le signal de sortie constitue le signal de sortie (VS) du circuit comparateur.

11. Dispositif de commande des transitions selon la revendication 10, dans lequel le circuit additionneur comprend un circuit de résistances (RdA, RdB, Rt) avec un noeud de circuit additionneur (MP), une première résistance (RdA) connectée entre le noeud de circuit additionneur (MP) et le premier élément différenciateur (CA1), une deuxième résistance (RdB) connectée entre le noeud de circuit additionneur (MP) et le deuxième élément différenciateur (CB1) et une troisième résistance (Rt) connectée entre le noeud de circuit additionneur (MP) et la source de tension de référence (Vct).
